Europäisches Patentamt

European Patent Office

Office européen des brevets

(19)

(11) **EP 0 977 051 B1**

(12) **FASCICULE DE BREVET EUROPEEN**

(45) Date de publication et mention
de la délivrance du brevet:
**09.04.2003 Bulletin 2003/15**

(51) Int Cl.$^7$: **G01S 7/36**

(21) Numéro de dépôt: **99401877.8**

(22) Date de dépôt: **23.07.1999**

(54) **Procédé de restitution de la sensibilité d'un radar en présence d'une pollution électromagnétique impulsionnelle**

Verfahren zur Wiederherstellung der Radarempfindlichkeit bei gepulster elektromagnetischer Störung

Method for restoring the sensitivity of a radar in presence of pulsed electromagnetic interference

(84) Etats contractants désignés:
**DE FR GB IT**

(30) Priorité: **31.07.1998 FR 9809878**

(43) Date de publication de la demande:
**02.02.2000 Bulletin 2000/05**

(73) Titulaire: **Thales**
**75008 Paris (FR)**

(72) Inventeurs:
- **Lupinski, Ludovic,
Thomsom-CSF, P.I., Dpt. Brevets
94117 Arcueil Cedex (FR)**
- **Le Beyec Guy, Thomsom-CSF, P.I., Dpt. Brevets
94117 Arcueil Cedex (FR)**
- **Levy, Pierre, Thomsom-CSF, P.I., Dpt. Brevets
94117 Arcueil Cedex (FR)**

(56) Documents cités:
**WO-A-98/33073          FR-A- 2 745 390**

**Description**

La présente invention concerne un procédé de restitution de la sensibilité d'un radar en présence d'une pollution électromagnétique impulsionnelle. L'invention s'applique notamment à tous les types de radar de détection ou de poursuite de cibles, les perturbations à caractère impulsionnel pouvant être indifféremment intentionnelles, dans le cas d'un brouillage haché ou modulé par exemple, ou non intentionnelles, dans le cas par exemple d'impulsions issues d'autres radars ou d'équipements électromagnétiques.

Pour un radar, la présence d'une pollution à caractère impulsionnel se traduit par une perte de sensibilité aux échos de cibles, cette perte de sensibilité étant comparable à une remontée équivalente du bruit :

- dans le domaine, distances et fréquences, des modes Doppler ;
- sur la fenêtre temporelle de la compression d'impulsion des modes à basses fréquences de récurrence cohérents.

Plusieurs solutions sont connues pour tenter de surmonter ce problème de perte de sensibilité. Pour les radars aéroportés, dans le cas de vols en patrouille ou dans le cadre d'un entraînement, diverses mesures peuvent être prises contre les interactions radar. Ces interactions étant en fait une pollution issue de radars identiques ou de même conception, ces mesures peuvent consister à :

- allouer à chaque radar une sous-bande de fréquence différente et séparée de quelques dizaines de mégahertz ;
- optimiser le spectre d'émission en utilisant par exemple des découpes temporelles pondérées afin de limiter l'étalement spectral de l'émission.

Toutefois, la protection ainsi créée s'avère insuffisante lorsque la distance entre radars est faible ou lorsque leur couplage à l'antenne est important, par exemple pour un couplage principal/principal. Dans un tel couplage, les radars sont en vis-à-vis, leurs lobes principaux étant dans deux directions exactement opposées.

Les techniques connues de type OLS, jouant sur l'opposition des lobes secondaires, permettent de redonner au radar une sensibilité opérationnelle en présence de pollution intentionnelle ou non intentionnelle dépointée vis-à-vis de l'axe de pointage de l'antenne du radar. Cependant, leur mise en oeuvre nécessite une ou plusieurs voies auxiliaires, d'où un surcoût, et leur domaine d'efficacité reste limité à la zone angulaire de recouvrement de la voie du radar traitée par cette ou ces voies auxiliaires. En particulier, le traitement est inopérant lorsque la pollution est reçue dans la zone utile de détection du lobe principal du radar pollué, cette zone étant définie par un gain environ supérieure à $G_{max}$ - 3db, où $G_{max}$ est le gain maximal du lobe principal.

Un but de l'invention est de pallier les inconvénients précités, elle vise notamment à améliorer les performances de détection en présence de signaux parasites tout en conservant la fonctionnalité de localisation en distance et en angle.

A cet effet, l'invention a pour objet un procédé de restitution de la sensibilité d'un radar en présence d'impulsions électromagnétiques de pollution, caractérisé en ce que un traitement radar comportant un nombre donné N de récurrences sur un nombre donné de cases distances, une cellule (i, k) correspondant à une case distance (i) dans une récurrence (k), le procédé comporte

- une première étape d'atténuation de la puissance des signaux présents dans les cellules (i, k) par un coefficient d'atténuation Gatt(i, k) inférieur ou égal à 1, ce coefficient d'atténuation étant égal à 1 si la puissance du signal dans la cellule est inférieure à un seuil S donné ;
- une deuxième étape de restitution d'un écho de cible atténué présent dans une case distance (i), en multipliant les signaux des cellules par un coefficient de restitution P(i) fonction des coefficients d'atténuation Gatt(i, k) de la case distance, de sorte que les impulsions de pollution soient restituées dans une moindre proportion que les signaux utiles.

L'invention a notamment pour principaux avantages qu'elle s'applique à toutes les voies utiles d'un radar, notamment la voie somme et les voies d'écartométrie, qu'elle peut s'appliquer sur chacune des voies de façon indépendante, ce qui assure une mise en oeuvre compatible avec les contraintes matérielles de la plupart des radars actuels, qu'elle assure au radar une sensibilité de détection pratiquement indépendante du niveau de pollution, qu'elle ne nécessite pas de voies auxiliaires et qu'elle est économique.

D'autres caractéristiques et avantages de l'invention apparaîtront à l'aide de la description qui suit faite en regard de dessins annexés qui représentent :

- la figure 1, un exemple d'utilisation du procédé selon l'invention dans une chaîne de traitement radar ;
- la figure 2a, un exemple d'impulsion émise par un radar pollueur ;

- la figure 2b, l'impulsion correspondant à la précédente en sortie du filtre d'entrée de la chaîne de traitement précitée ;
- la figure 3, un exemple de puissances de signaux reçus pour un bloc de cases distances d'une récurrence donnée du traitement radar ;
- les figures 4a et 4b, respectivement les signaux de la figure précédente avant et après atténuation, en regard d'un seuil ;
- la figure 5 ; un exemple d'écho de cible restitué après atténuation.

Lorsque des cellules radar sont polluées par des impulsions électromagnétiques, le radar est désensibilisé partiellement ou totalement sur ces cellules. Après traitement cohérent ou incohérent du radar, par exemple après traitement par transformée de Fourier rapide FFT, la pollution issue de ces impulsions s'étale, partiellement ou totalement, sur l'ensemble du domaine temporel du radar correspondant à la durée de son traitement cohérent. Cela a pour conséquence de désensibiliser le radar sur toute la durée du traitement. Toutefois, sur l'ensemble des cellules temporelles ne présentant pas de signal de perturbation, le radar conserve sa sensibilité nominale. Le procédé selon l'invention exploite les seules cellules temporelles peu polluées ou non polluées. La performance de restitution de la sensibilité du radar dépend donc notamment du nombre de ces cellules par rapport au nombre total de cellules du domaine temporel du radar. En fait, l'invention exploite notamment le caractère ponctuel de la gêne apportée par la pollution. Le caractère ponctuel signifie que les signaux de pollution ne sont pas présents à chaque récurrence radar pour une case distance donnée, par opposition à un signal utile, présent dans toutes les récurrences d'un traitement radar.

Le procédé selon l'invention comporte au moins deux étapes, plus particulièrement :

- une étape d'atténuation du gain du récepteur sur les cellules polluées dans le domaine temporel ;
- suivie d'une étape de restitution du niveau de puissance d'un éventuel écho de cible.

L'étape d'atténuation peut s'effectuer de manière adaptative, c'est-à-dire que la puissance des échantillons temporels est comparée à un seuil afin de détecter les cellules polluées. En cas de dépassement, la puissance est ramenée à la valeur du seuil en préservant toutefois l'information de phase si le traitement radar en aval du procédé est partiellement ou totalement cohérent Pour cela, on apporte une atténuation de valeur identique aux composantes réelles et imaginaires de la cellules sous traitement.

Dans le domaine temporel, la puissance du signal d'un écho de cible est uniformément répartie sur l'ensemble des cellules d'une case distance, contrairement aux signaux de perturbation dont le caractère ponctuel a été évoqué précédemment. L'intégrale de la puissance sur l'ensemble des cellules de la case distance subit une diminution de son niveau suite à l'atténuation des cellules, polluées et non polluées. L'étape suivante consiste alors à restituer le niveau initial des signaux utiles, c'est-à-dire les échos de cibles, par le calcul d'un gain dont la valeur est identique pour l'ensemble des cellules d'une case distance.

L'étape de restitution du niveau de puissance d'un éventuel écho de cible est l'application d'un gain qui est estimé par le calcul de la différence entre le niveau de puissance d'un écho fictif calculé après intégration cohérente et incohérente des cellules d'une même case distance, avec ou sans atténuation. Le recouvrement du niveau de puissance d'un éventuel écho de cible sur les voies somme, circulaire et élévation du radar permet notamment d'assurer une qualité de mesure d'angle et de distance compatible d'une poursuite.

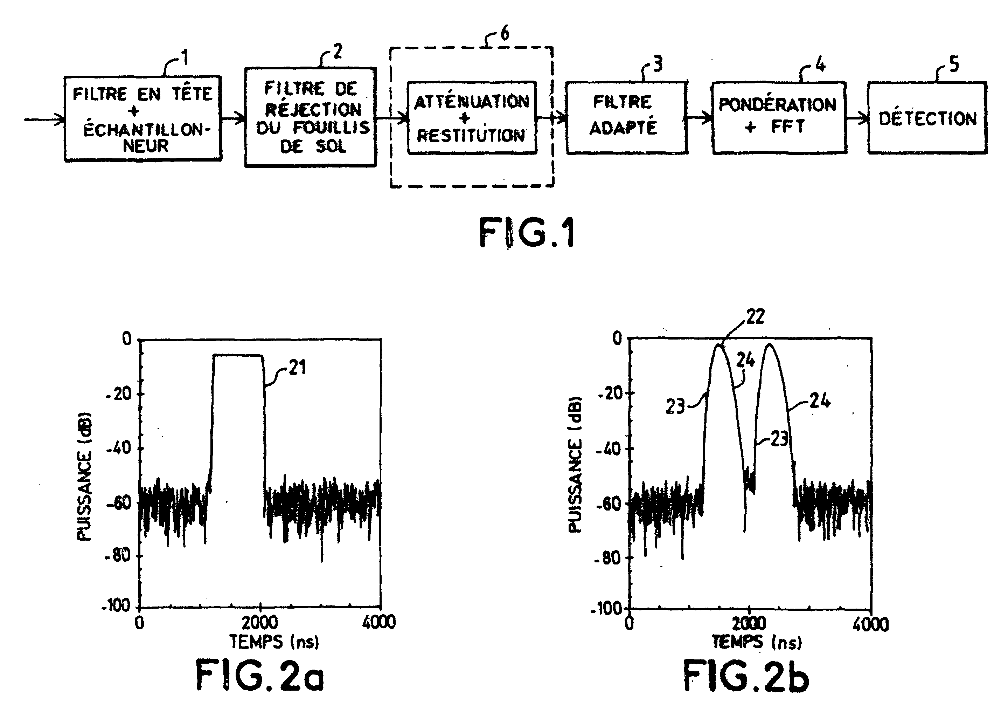

La figure 1 présente un exemple d'utilisation du procédé selon l'invention dans une chaîne de traitement radar, dans le cas par exemple d'un fonctionnement en mode air-air d'un radar aéroporté de conduite de tir. La chaîne de traitement est par exemple numérique. Elle comporte par exemple un filtre d'entrée et un échantillonneur 1, un filtre de réjection du fouillis de sol 2, un filtre adapté 3, des moyens de pondération et de traitement par transformée de Fourier rapide 4 et des moyens de détection 5. La sortie de l'échantillonneur 1 attaque l'entrée du filtre de réjection 2. Des moyens 6 de traitement selon le procédé selon l'invention sont intercalés entre la sortie du filtre de réjection 2 et l'entrée du filtre adapté 3. La sortie de ce dernier attaque l'entrée des moyens de transformée de Fourier rapide 4 dont la sortie est reliée à l'entrée des moyens de détection 5.

Le procédé selon l'invention peut par exemple être appliqué par des circuits numériques 6 classiques, à base de processeurs et de mémoires. Ils sont par exempte intégrés dans les circuits de traitement radar. Les circuits 6 appliquant le procédé selon l'invention sont par exemple placés après le filtre 2 de réjection du fouillis de sol reçu dans le lobe principal de l'antenne. Le fouillis de sol est alors considéré comme une source de pollution supplémentaire pouvant augmenter le nombre de cellules polluées. Le choix d'un filtre optimal de réjection de fouillis de sol résulte notamment d'un compromis entre :

- d'une part le niveau d'atténuation du fouillis de sol ;
- et d'autre part l'augmentation du pourcentage de cellules polluée par la gêne ponctuelle suite à ce filtrage.

Les filtres usuels, à simple ou double annulation, conviennent pour la plupart des modes radar Doppler air-air. Dans le cas d'une interaction radar, l'émetteur du radar pollueur et le récepteur du radar pollué présentent généralement un écart hyperfréquence. L'impulsion en sortie du filtre adapté est alors réduite à ses seuls fronts de montée et de descente comme l'illustrent les figures 2a et 2b.

La figure 2a présente la forme d'une impulsion 21 de signal hyperfréquence émise par l'émetteur du radar pollueur et reçue à l'entrée du récepteur du radar pollué. Plus particulièrement, l'axe des ordonnées indique la puissance, en dB, et l'axe des abscisses indique la durée de l'impulsion, en nanosecondes. La figure 2b représente l'impulsion correspondante 22 en sortie du filtre d'entrée 1, dans le cas par exemple où l'écart hyperfréquence précité est de l'ordre de 10 MHz. Cette figure, qui représente toujours la puissance du signal en fonction du temps, montre bien que l'impulsion en sortie du filtre est réduite à ses seuls fronts de montée 23 et de descente 24. C'est pourquoi, le filtre d'entrée ainsi que la cadence d'échantillonnage de l'échantillonneur 1 sont choisis pour que les transitions temporelles issues des signaux impulsionnels restent brèves et localisées sur un pourcentage limité de cellules, quantité qui conditionne directement la performance de restitution de la sensibilité du radar selon l'invention. Pour limiter le nombre de cellules polluées, on peut par exemple choisir :

- une largeur de la bande passante du filtre 1 quatre à cinq fois supérieures à celle du filtre adapté à l'impulsion émise par le radar pollueur ;
- une cadence de traitement 6 du procédé selon l'invention qui respecte la condition d'échantillonnage de Shannon, à cet effet, cette cadence peut suivre par exemple la cadence des récurrences du traitement radar.

A la sortie du traitement 6, les signaux sont filtrés par le filtre adapté 3 du radar. Les signaux peuvent ensuite être traités à la cadence nominale du radar, en fait généralement la cadence qui respecte la condition d'échantillonnage de Shannon.

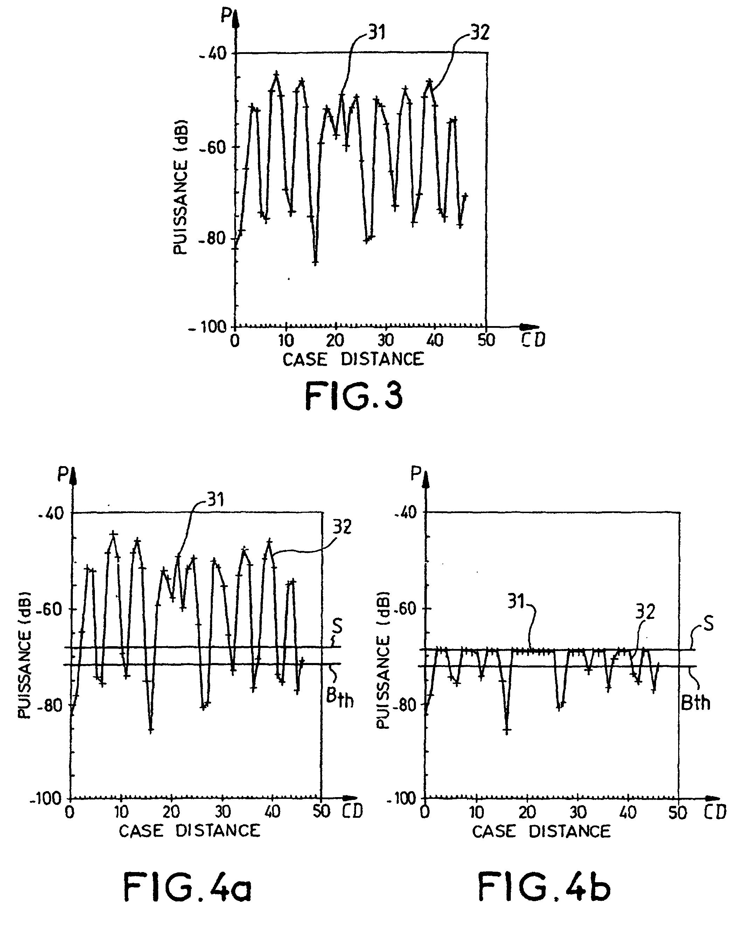

La figure 3, présente pour une récurrence radar donnée d'ordre k, la puissance reçue P, exprimée en dB, pour un bloc de cases distances CD, au nombre de 43 à titre d'exemple. Sur cette figure apparaît un signal 31 qui est un écho d'une cible, ce signal apparaît par exemple sur la case distance 21. Les autres pointes de puissance 32, présentes sur d'autres cases distance correspondent à des signaux de pollution. La figure 3 sert de base pour illustrer la première étape du procédé selon l'invention. Cette première étape atténue l'ensemble des cellules qui dépassent un seuil de puissance S donné, par exemple égal ou supérieur à 0 dB, défini par rapport au niveau de puissance du bruit thermique Bth. Pour une récurrence d'ordre k donnée, une cellule est définie par le numéro de la case distance i à laquelle elle appartient et par l'ordre de la récurrence radar k. A titre d'exemple, i varie de 1 à 43 et k varie de 1 à 128. Une cellule est donc définie par un couple (i, k) où la première composante représente le numéro de case distance et la deuxième composante représente l'ordre de la récurrence.

Pour chaque cellule (i, k) du bloc de signaux temporels sous traitement de la figure 3, contenant un signal hyperfréquence, noté sous forme complexe X(i, k) + jY(i, k), le niveau d'atténuation d'amplitude, noté Gatt(i, k), s'écrit par exemple selon la relation suivante :

$$\text{Gatt}(i,k) = \sqrt{\frac{S}{\sqrt{\|X(i,k)+jY(i,k)\|^2}}} \qquad (1)$$

si $\|X(i,k) + jY(i,k)\|^2 > S$, ce qui exprime en fait que la puissance du signal est supérieure au seuil S ;

Sinon,

$$\text{Gatt}(i,\ k) = 1 \qquad (2)$$

Pour chaque cellule (i, k), l'opération suivante est effectuée :

$$[X(i,k) + jY(i,k)] \times \text{Gatt}(i,k),$$

c'est-à-dire en fait que le signal de la cellule est multiplié par le coefficient d'atténuation Gatt(i, k) de la cellule telle que définie précédemment par les relations (1) et (2). En appliquant l'atténuation à la fois sur la partie réelle X et sur la partie imaginaire Y d'un signal, cette atténuation est réalisée sans perte de phase pour les signaux qui dépassent le seuil S, donc notamment pour les signaux utiles correspondant à des échos de cibles.

Au cours de l'étape d'atténuation, le niveau de puissance du signal cible est éventuellement atténué comme l'illustrent les figure 4a et 4b.

La figure 4a reprend l'illustration des signaux de la figure 3 avec en plus le seuil S et le niveau de puissance du bruit thermique Bth, représentés par des droites de puissance constante en fonction des cases distance CD. Le seuil S est supérieur ou égal au bruit thermique Bth. Le seuil est défini par rapport au niveau de bruit thermique selon un écart positif qui optimise la sensibilité du radar. La figure 4b montre que le signal utile 31, correspondant au signal de la cible, est lui aussi atténué au niveau du seuil S, comme les signaux de pollution 32. Cette perte du niveau de puissance du signal cible 31 peut être estimée et compensée. Pour cela, l'amplitude du signal cible 31 présent dans une case i est modélisée par la grandeur S définie selon la relation suivante :

$$S = S_0 e^{j2\pi f_d t} \tag{3}$$

où $S_0$ représente le niveau d'amplitude du signal cible 31 et $f_d$ sa fréquence Doppler associée.

Dans le filtre Doppler ou filtre adapté 3 correspondant à la fréquence du signal cible, et en l'absence d'application du procédé selon l'invention, plus particulièrement en l'absence d'atténuation, la transformée de Fourier rapide FFT pondérée conduit à une intégration cohérente définie de la façon suivante, dans la mesure où le signal utile est présent à chaque récurrence avec une amplitude sensiblement constante égale à $S_0$ :

$$\sum_{k=0}^{N} S_0 \times w_k = S_0 \times \left( \sum_{k=0}^{N} w_k \right) \tag{4}$$

où N est le nombre de récurrences et où les coefficients $w_k$ sont les coefficients de pondération de la FFT.

Dans le même filtre Doppler, et avec l'utilisation du procédé selon l'invention, la transformation de Fourier rapide FFT conduit à l'intégration cohérente définie de la façon suivante, toujours dans la mesure où le signal utile est présent à chaque récurrence avec sensiblement le même niveau de puissance :

$$\sum_{k=0}^{N} S_0 \times w_k \times \text{Gatt}(i,k) = S_0 \times \left( \sum_{k=0}^{N} w_k \times \text{Gatt}(i,k) \right) \tag{5}$$

Dans ce cas, la perte d'amplitude à compenser Pc est donnée par la relation suivante :

$$Pc = \frac{\sum_{k=0}^{N} (w_k \times \text{Gatt}(i,k))}{\sum_{k=0}^{N} w_k} \tag{6}$$

Pour retrouver, après FFT, le niveau de la cible, il faut appliquer par case distance i un gain estimé P(i) défini par la relation suivante :

$$P(i) = 1 / Pc = \frac{\displaystyle\sum_{k=0}^{N} w_k}{\displaystyle\sum_{k=0}^{N} w_k \times Gatt(i,k)} \qquad (7)$$

La perte de niveau de puissance d'un éventuel écho de cible présent dans une case distance i est alors par exemple compensée au cours de l'étape suivante.

Ce qui précède montre en effet que l'étape d'atténuation permet de s'affranchir des signaux de pollution, en les ramenant leur puissance en dessous d'un certain niveau de seuil S. Cependant, en même temps, les signaux utiles, ceux qui proviennent d'une vrai cible se trouvent aussi écrêtés au même niveau de puissance que ce seuil, d'où la nécessité de l'étape suivante de restitution du niveau de puissance d'un éventuel écho de cible.

Dans cette étape, le coefficient de restitution P(i), défini précédemment selon la relation (7), est calculé pour chaque case distance i. Puis, pour chaque cellule (i, k) de chaque case distance k, l'opération suivante est effectuée :

$$[X(i,k) + jY(i,k)] \times P(i) \qquad (8)$$

c'est-à-dire en fait que le signal présent dans la cellule (i, k) est multiplié par le coefficient de restitution P(i).

Le coefficient de restitution P(i) est parfaitement défini pour chaque case distance, dans la mesure où tous les éléments qui le composent peuvent être définis. En effet

- les coefficients de pondération wk sont ceux de la transformée de Fourier rapide appliquée dans un radar classique, en fait ces coefficients sont ceux appliqués pour tous types de traitement cohérent du type à transformation de Fourier rapide FFT ;
- et le coefficient d'atténuation Gatt(i, k) défini selon les relations (1) et (2) est déterminé pendant la première étape, celle d'atténuation, en particulier, pour une case distance donnée i, tous les coefficients d'atténuation Gatt(i, k) de chaque récurrence k sont connus.

En ce qui concerne la ou les cases distance comportant le signal utile, celui de l'écho de cible, l'application du coefficient de restitution P(i) permet de restituer le signal cible pratiquement dans son intégralité. En effet, ce signal étant présent dans toutes les récurrences, à un niveau de puissance sensiblement constant $S_0$, la définition du coefficient de restitution selon les relations (4) à (7) montrent que cette puissance $S_0$ est pratiquement restituée, éventuellement aux pertes d'échantillonnage en fréquence près.

En ce qui concerne les cases distances comportant des signaux de pollution, eux aussi subissent la deuxième étape du procédé selon l'invention. La puissance des ces signaux parasites est donc elle aussi augmentée par application des coefficients de restitution calculés sur les cases distance correspondantes. Cependant dans ce cas, la remontée de puissance est beaucoup plus faible que celle du signal utile. Les signaux pollués ne sont donc que très partiellement restitués. En effet, contrairement au signal utile, les signaux de pollution ou d'interaction, ne sont pas présents à chaque récurrence radar, ils ont un caractère ponctuel. Sur l'ensemble de N récurrences d'une case distance comportant des signaux de pollution, il y a donc des récurrences, et plus particulièrement des cellules (i, k), où le signal de pollution présente une puissance inférieure au seuil S. Dès lors, selon la relation (2), l'atténuation correspondante Gatt(i, k) est égale à 1. Ainsi, le coefficient de restitution P(i) pour ces cases distances, défini et appliqué selon la relation (7) comporte des atténuations Gatt(i, k) égales à 1. Etant donné que les coefficients de pondérations $w_k$ sont prédéterminés, et surtout les mêmes pour toutes les cases distance, le coefficient de restitution P(i) ne peut être alors qu'inférieur au coefficient de restitution d'une case comportant un signal utile dont toutes les atténuations sont inférieures à 1, selon la relation (1), puisque pour cette case, le signal utile, qui se répète d'une récurrence à l'autre, est supérieur au seuil S. Il apparaît aussi que la différence de remontée entre le signal utile et les signaux parasites est d'autant plus importante que, pour une case distance comportant des signaux de pollution, le nombre de récurrences sans signaux pollueurs est important, c'est-à-dire en fait que le caractère de la pollution, ou plus particulièrement de l'interaction, est ponctuel.

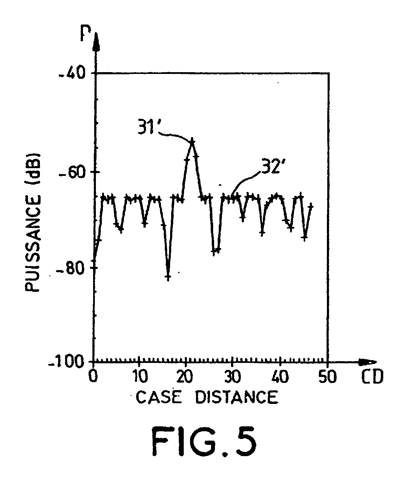

La figure 5 présente l'effet de la phase de restitution dans un cas de figure issu de la figure 4b. Les signaux de pollution profitent bien d'une remontée de puissance, mais sont restitués en signaux 32' dont la puissance reste bien en dessous du signal utile restitué 31'. Ce signal cible restitué 31' apparaît maintenant comme parfaitement dégagé des signaux de pollution restitués 32'. Ce signal utile restitué 31', dégagé ainsi des signaux de pollution, permet alors notamment d'effectuer des mesures d'angle et de distance de qualité.

A titre d'exemple, la mise en oeuvre du procédé selon l'invention a été décrite pour un traitement cohérent de type FFT. Cependant, le procédé selon l'invention s'applique également aux autres traitements cohérents, ceux comportant notamment une compression d'impulsions. Il s'applique aussi aux traitements incohérents comportant notamment une post-intégration. En fait, il s'applique dès lors où l'on peut définir les coefficients $w_k$ de la relation (7) de la transformée de Fourier rapide FFT, par exemple associés au filtre adapté 3 du radar, et qui définissent la fenêtre de réception de ce dernier.

L'invention est efficace quelle que soit la direction d'arrivée des signaux de pollution, notamment dans la zone angulaire utile du lobe principal de la voie somme ou dans celle des lobes principaux des voies angulaires. En effet, le procédé ne fait notamment pas intervenir les paramètres de direction. Il peut par ailleurs s'appliquer sur chacune des voies de réception d'un radar, et cela de façon indépendante, ce qui lui assure une mise en oeuvre compatible avec les contraintes matérielles de la plupart des radars. Par ailleurs, la sensibilité d'un radar est restituée quel que soit le niveau de pollution à l'intérieur des cases distance. Enfin, il ne nécessite pas de voies auxiliaires. Sa mise en oeuvre est donc simplifiée, et par là même économique.

L'invention a été décrite à titre d'exemple pour le cas d'une chaîne radar cohérente avant détection. Elle peut cependant être appliquée pour des radars ayant une chaîne de traitement incohérent, par exemple pour des radars à basse ou moyenne fréquence de récurrence avec post-intégration. Le coefficient de restitution P(i) n'est par exemple plus défini selon la relation (7) mais reste fonction des atténuations Gatt(i, k) de sorte que les signaux de pollution soient restitués dans une moindre proportion que les signaux utiles.

**Revendications**

1. Procédé de restitution de la sensibilité d'un radar en présence d'impulsions électromagnétiques de pollution, **caractérisé en ce que** un traitement radar comportant un nombre donné N de récurrences sur un nombre donné de cases distances, une cellule (i, k) correspondant à une case distance (i) dans une récurrence (k), le procédé comporte

   - une première étape d'atténuation de la puissance des signaux présents dans les cellules (i, k) par un coefficient d'atténuation Gatt(i, k) inférieur ou égal à 1, ce coefficient d'atténuation étant égal à 1 si la puissance du signal dans la cellule est inférieure à un seuil S donné ;
   - une deuxième étape de restitution d'un écho de cible (31) atténué présent dans une case distance (i), en multipliant les signaux des cellules par un coefficient de restitution P(i) fonction des coefficients d'atténuation Gatt(i, k) de la case distance, de sorte que les impulsions de pollution soient restituées dans une moindre proportion que les signaux utiles.

2. Procédé selon la revendication 1, **caractérisé en ce que** le radar ayant une chaîne de traitement cohérent, le coefficient de restitution P(i) est défini par la relation suivante :

$$P(i) = \frac{\displaystyle\sum_{k=0}^{N} w_k}{\displaystyle\sum_{k=0}^{N} w_k \times Gatt(i,k)}$$

   où:

   - Gatt(i, k) représente le coefficient d'atténuation d'une cellule de la case distance (i) pour la récurrence d'ordre k, k étant compris entre 1 et N ;
   - les coefficients $w_k$ sont les coefficients de pondération de la transformée de Fourier rapide FFT du radar.

3. Procédé selon la revendication 2, **caractérisé en ce qu'**un signal présent dans une cellule (i, k) étant défini selon l'expression complexe X(i, k) + jY(i, k), le coefficient d'atténuation Gatt(i, k) est défini par la relation suivante :

$$Gatt(i,k) = \sqrt{\frac{S}{\|X(i,k)+jY(i,k)\|^2}}$$

si $\|X(i,k) + jY(i,k)\|^2 > S$     Sinon, $Gatt(i, k) = 1$

**4.** Procédé selon l'une quelconque des revendications précédentes, **caractérisé en ce qu'**un signal présent dans une cellule (i, k) étant défini selon l'expression complexe X(i, k) + jY(i, k), le signal atténué est défini par l'expression complexe [X(i,k) + jY(i,k)] x Gatt(i,k).

**5.** Procédé selon l'une quelconque des revendications précédentes, **caractérisé en ce qu'**il est appliqué en sortie d'un filtre de réjection de fouillis de sol (2).

**6.** Procédé selon l'une quelconque des revendications précédentes, **caractérisé en ce que** les impulsions de pollution sont émises par un radar.

## Claims

**1.** Method for restoring the sensitivity of a radar in the presence of electromagnetic interference pulses, **characterized in that** a radar processing comprising a given number N of recurrences over a given number of range bins, a cell (i, k) corresponding to a range bin (i) in a recurrence (k), the method comprises:

- a first step of attenuation of the power of the signals present in the cells (i, k) by an attenuation coefficient Gatt (i, k) less than or equal to 1, this attenuation coefficient being equal to 1 if the power of the signal in the cell is less than a given threshold S;
- a second step of restoring an attenuated target echo (31) present in a range bin (i) by multiplying the signals of the cells by a restoring coefficient P(i) dependent on the attenuation coefficients Gatt(i, k) of the range bin, so that the interference pulses are restored in a lesser proportion than the useful signals.

**2.** Method according to Claim 1, **characterized in that** the radar having a coherent processing chain, the restoring coefficient P(i) is defined by the following relation:

$$P(i) = \frac{\displaystyle\sum_{k=0}^{N} w_k}{\displaystyle\sum_{k=0}^{N} w_k \times Gatt(i,k)}$$

where:

- Gatt(i, k) represents the attenuation coefficient of a cell of the range bin (i) for the recurrence of order k, k lying between 1 and N;
- the coefficients $w_k$ are the weighting coefficients of the Fast Fourier Transform FFT of the radar.

**3.** Method according to Claim 2, **characterized in that** a signal present in a cell (i, k) being defined according to the complex expression X(i, k) + jY(i, k), the attenuation coefficient Gatt(i, k) is defined by the following relation:

$$Gatt(i,k) = \sqrt{\frac{S}{\|X(i,k)+jY(i,k)\|^2}}$$

if     $\|X(i,k)+jY(i,k)\|^2 > S$
Else,     $Gatt(i,k) = 1$

**4.** Method according to any one of the preceding claims, **characterized in that** a signal present in a cell (i, k) being defined according to the complex expression X(i, k) + jY(i, k), the attenuated signal is defined by the complex expression [X(i, k) + jY(i, k)] x Gatt(i, k) .

**5.** Method according to any one of the preceding claims, **characterized in that** it is applied at the output of a ground clutter rejection filter (2).

**6.** Method according to any one of the preceding claims, **characterized in that** the interference pulses are emitted by a radar.

**Patentansprüche**

**1.** Verfahren zur Wiederherstellung der Empfindlichkeit eines Radars in Gegenwart von elektromagnetischen Störimpulsen, **dadurch gekennzeichnet, daß** eine Radarverarbeitung eine gegebene Anzahl N von Wiederholungen über eine gegebene Anzahl von Entfernungsfeldern umfaßt, wobei eine Zelle (i, k) einem Entfernungsfeld (i) in einer Wiederholung (k) entspricht, wobei bei dem Verfahren:

- in einem ersten Schritt die Leistung von in den Zellen (i, k) vorhandenen Signalen durch einen Dämpfungskoeffizienten Gatt(i, k), der kleiner oder gleich 1 ist, gedämpft wird, wobei dieser Dämpfungskoeffizient gleich 1 ist, falls die Leistung des Signals in dieser Zelle kleiner als ein gegebener Schwellenwert S ist;

- in einem zweiten Schritt ein in einem Entfernungsfeld (i) vorhandenes gedämpftes Zielecho (31) wiederhergestellt wird, indem die Signale der Zellen mit einem von den Dämpfungskoeffizienten Gatt(i, k) des Entfernungsfeldes abhängenden Wiederherstellungskoeffizienten P(i) multipliziert werden, derart, daß die Störimpulse in einem kleineren Grad als die Nutzsignale wiederhergestellt werden.

**2.** Verfahren nach Anspruch 1, **dadurch gekennzeichnet, daß** der Wiederherstellungskoeffizient P(i) dann, wenn das Radar eine kohärente Verarbeitungskette besitzt, durch die folgende Beziehung definiert ist:

$$P(i) = \frac{\sum_{k=0}^{N} w_k}{\sum_{k=0}^{N} w_k \times \text{Gatt}(i,k)} \ .$$

wobei:

- GATT(i, k) den Dämpfungskoeffizienten einer Zelle des Entfernungsfeldes (i) für die Wiederholung der Ordnung k darstellt, wobei k im Bereich von 1 bis N liegt;

- die Koeffizienten $w_k$ die Gewichtungskoeffizienten der schnellen Fouriertransformation FFT des Radars sind.

**3.** Verfahren nach Anspruch 2, **dadurch gekennzeichnet, daß** der Dämpfungskoeffizient Gatt(i, k) dann, wenn ein in einer Zelle (i, k) vorhandenes Signal durch den komplexen Ausdruck X(i, k) + jY(i, k) definiert ist, durch die folgende Beziehung definiert ist:

$$\text{Gatt}(i,k) = \sqrt{\frac{S}{\|X(i,k)+jY(i,k)\|^2}}$$

falls $\|X(i,k) + jY(i,k)\|^2 > S$
sonst Gatt(i, k) = 1.

4. Verfahren nach einem der vorhergehenden Ansprüche, **dadurch gekennzeichnet, daß** das gedämpfte Signal dann, wenn ein in einer Zelle (i, k) vorhandenes Signal durch den komplexen Ausdruck X(i, k) + jY(i, k) definiert ist, durch den komplexen Ausdruck [X(i, k) + jY(i, k)] × Gatt (i, k) definiert ist.

5. Verfahren nach einem der vorhergehenden Ansprüche, **dadurch gekennzeichnet, daß** es auf das Ausgangssignal eines Filters für die Zurückweisung von unerwünschten Bodenechos (2) angewendet wird.

6. Verfahren nach einem der vorhergehenden Ansprüche, **dadurch gekennzeichnet, daß** die Störimpulse von einem Radar ausgesendet werden.

| FILTRE EN TÊTE + ÉCHANTILLON- NEUR | FILTRE DE RÉJECTION DU FOUILLIS DE SOL | ATTÉNUATION + RESTITUTION | FILTRE ADAPTÉ | PONDÉRATION + FFT | DÉTECTION |

**FIG.1**

**FIG.2a**

**FIG.2b**

FIG.3

FIG.4a

FIG.4b

12

FIG.5